# EUROPEAN PATENT APPLICATION

(11) **EP 1 262 352 A2**
(43) Date of publication of application: **04.12.2002**
(21) Application number: 02252883.0
(22) Date of filing: 24.04.2002
(51) Int. Cl.: B60J 5/04

(54) **A vehicle door module assembly and connecting member**

(30) Priority: 31.05.2001 GB 0113128
(71) Applicant: ArvinMeritor Light Vehicle Systems (UK) Ltd, Birmingham, West Midlands, B30 3BW (GB)
(72) Inventor: Bromhall, Adrian V., Penn, Wolverhampton WV4 5RF (GB); Birdi, Jagjiwan S., Edgbaston, Birmingham B17 8JE (GB)
(74) Representative: Jones, John Bryn

(57) **Abstract**

A door module assembly comprising a door module (22, 122, 222) and a door component (24, 124, 224) secured together by a joint (20) so as to enable the module to be mountable, at a first position to a door casing and the door component to be mountable at a second position relative to the door casing, the joint permitting resilient relative movement between the module and component in at least two planes prior to mounting so as to enable tolerance errors between the first and second positions to be overcome

## Description

The present invention relates to a door module assembly and a joint. More particularly, the present invention relates to a door module assembly comprising a door module and a door component such as a latch assembly, for example, flexibly interconnected by a connecting member.

Rather than individually mounting vehicle door components such as door release handles, winding mechanisms, loudspeakers, etc., on to a door casing, it has become increasingly prevalent in the automotive industry to pre-assemble the individual components (hereinafter referred to as "door components") on to a separate subassembly commonly known as a door module which is often in the form of a pressed steel sheet having the requisite cut-outs and/or mounting brackets, as required to fit the components. This enables the assembled components to be tested away from a vehicle assembly plant and then shipped to the plant together for fitting to the door casing. The door module often also forms a barrier between the "wet side" and "dry side" of a door, and should in such cases be substantially water impermeable so as to prevent electrical components on the dry side being damaged by moisture ingress.

It is desirable to have a latch assembly secured to the module so that this can be tested in conjunction with the internal door release handle, for example. The latch assembly must be independently secured to the door casing to ensure that the connection between the door and an associated door pillar is of sufficient strength to withstand a crash impact. However, the potential for a build up of tolerance errors between the anchor points of the module and the latch on the door casing means that it is undesirable to have a rigid connection between the latch assembly and module because this may result in a mismatch between the anchor points on the door casing and latch/module once the module is fitted to the door casing.

It is known from, for example, US 5,308,129 to Hlavaty to provide a lost motion connection between a latch and door module.

However, one disadvantage of the prior art is the potential for the connection to generate noise when the fully assembled door is subjected to vibration of the associated vehicle in use. A further disadvantage of the prior art is that the joint is not water impermeable.

The present invention seeks to overcome, or at least mitigate, the problems of the prior art.

One aspect of the present invention provides a door module assembly comprising a door module and a door component secured together by a joint so as to enable the module to be mountable, at a first position to a door casing and the door component to be mountable at a second position relative to the door casing, the joint permitting resilient relative movement between the module and component in at least two planes prior to mounting so as to enable tolerance errors between the first and second positions to be overcome.

Another aspect of the present invention provides a resilient connecting member for enabling, in use, limited relative movement between a first component and a second component, the connecting member having a first and second mounting regions comprising first and second spaced relatively narrow portions for mounting the first and second components in a mutually spaced relationship and engagement portions positioned at the ends of the member to assist in the mounting of the components in the relatively narrow portions.

Embodiments of the present invention will now be described, by way of example only, with reference to the accompanying drawings in which:
FIGURE 1 is a plan view of a connecting member according to one embodiment of the present invention; and
FIGURE 2 is a plan view of a door module assembly according to another embodiment of the invention incorporating the connecting member of Figure 1;
FIGURE 3 is a schematic cross-sectional view through a door assembly including a module assembly according to a further embodiment of the present invention; and
FIGURE 4 is a schematic cross-sectional view through a door assembly including a module assembly according to another embodiment of the present invention.

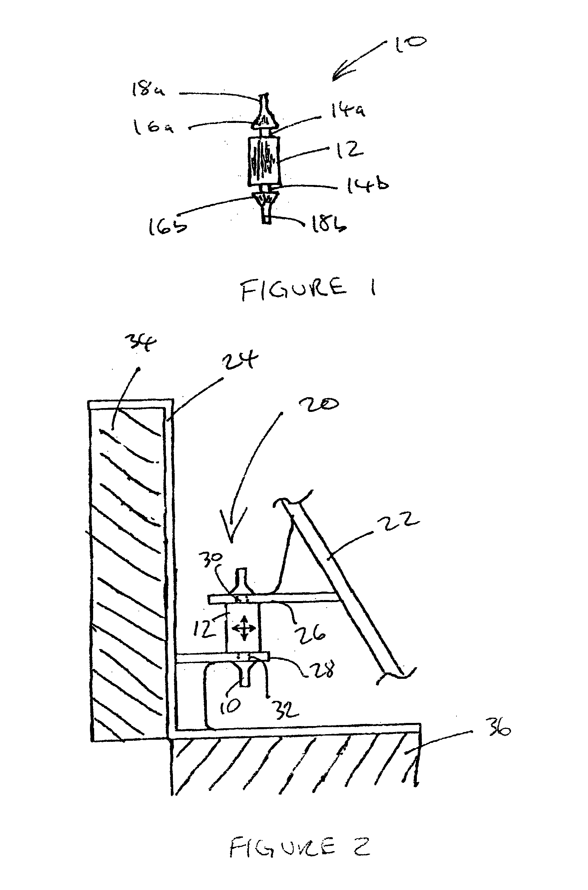

Referring to Figure 1 there is shown a resilient connecting member 10 which in this embodiment is in the form of a rivet 10. The rivet 10 is elongate and substantially symmetrical about its transverse axis. Working from the line of symmetry outwards, the rivet 10 comprises a central body portion 12, first and second mounting regions comprising relatively narrow portions 14a and 14b and relatively wide portions 16a and 16b, and engagement portions 18a and 18b. In this embodiment, the relatively wide portions 16a and 16b taper into the relatively narrow engagement portions 18a and 18b. In this embodiment the rivet is cylindrical, although this need not necessarily be the case. The rivet is preferably manufactured integrally from a synthetic rubber material such as EPDM, or a plastics material such as HYDREL (RTM). In certain classes of embodiment, the central body portion is hollow, thereby causing the rivet to be more flexible in an axial direction in particular.

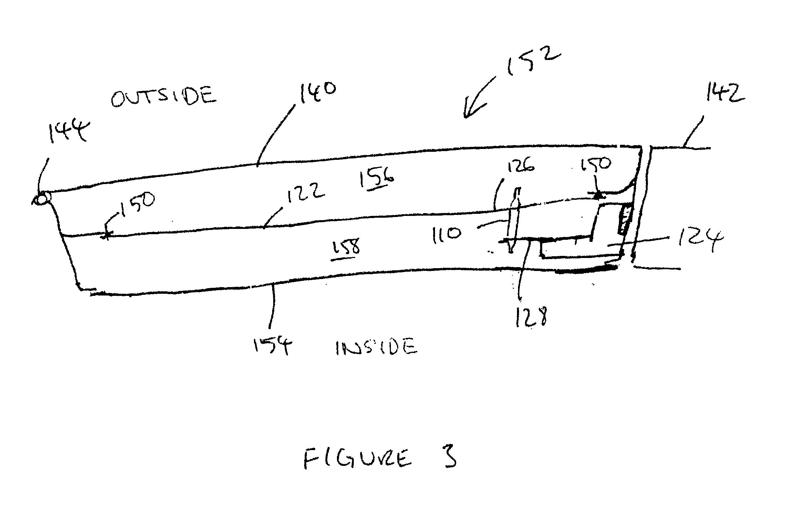

Turning now to Figure 2, in which a joint 20 incorporating two rivets 10 is shown with the joint interconnecting a bracket portion 26 of a door module 22 and bracket portion 28 of a door component which in this embodiment is a latch assembly 24. In this embodiment the latch assembly incorporates a power actuator portion 34 and latch portion 36. The second rivet cannot be seen as it is obscured in this view by the first rivet 10.

Brackets 26 and 28 extend from the door module 22 and latch assembly 24 respectively such that when the door module 22 and latch assembly 24 are at their notional no load positions, the brackets 26 and 28 are in a substantially parallel mutually spaced relationship. Additionally, in this notional no load position, apertures 30 and 32 provided in brackets 26 and 28 to receive rivet 10 are in substantially co-axial alignment. Further apertures (not shown) are also provided in brackets 26 and 28 to receive the second rivet.

To secure together the latch assembly and door module to form a door module assembly, one engagement portion 18a of the rivet 10 is introduced to aperture 30 and is of sufficient length to enable the engagement portion protruding through the aperture 30 to be engaged by hand or machine to pull the adjacent wide portion 16a of the mounting region through the aperture 30 so that the rivet 10 comes to rest with the relatively narrow portion 14a held in the aperture 30. A similar operation is carried out to secure the other narrow portion 14b in aperture 32 of the latch assembly 24 and to secure the second rivet in the further apertures provided for this purpose.

Brackets 26 and 28 are advantageously secured together by two such rivets so as to prevent unrestricted rotation of the latch assembly 24 relative to the door module 22. The rivets 10 are shaped such that it is not possible for their removal from the brackets to be achieved without the rivet being damaged.

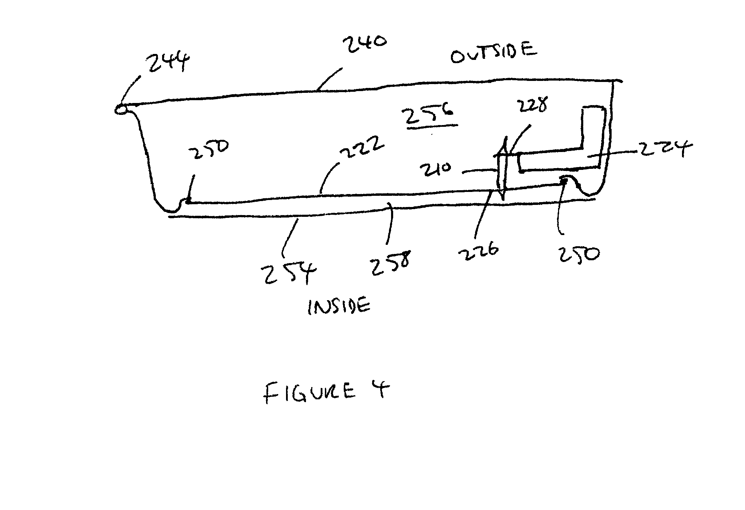

Turning to Figure 3, an alternative module assembly arrangement is shown. Like numerals have been used where possible for like parts with the addition of the prefix '1'.

Figure 3 shows a cross-section along a horizontal plane of a door 152 and vehicle "B" pillar 142 when the door 152 is closed. The door comprises a door casing 140, a door module 122 and an inner door trim panel 154. The door is pivotally mounted to the vehicle by a hinge 144. The door module 122 is secured to the casing 140 intermediate the casing and the trim panel 154. In this embodiment the module 122 defines a substantially water impermeable barrier between the outer wet side 156 of the door and the inner dry side 158, with a seal 150 preferably being provided around its periphery to achieve this.

It can be seen that in this embodiment, the latch assembly is resiliently mounted to the door module 122 via a rivet 110 interconnecting bracket portions 126 and 128 of the module 122 and latch assembly 124 respectively. Again, a further rivet is provided, but which is obscured by rivet 110. It can be seen that in Figure 3 the rivet 110 is arranged substantially transverse planes defined by brackets 126 and 128, and thus a plane defined the door module 122 as a whole. To maintain the substantial water impermeability of the module as a whole, the rivets 110 are also water impermeable and form a substantially water impermeable joint.

Turning to Figure 4, a further alternative module assembly arrangement is shown. Like numerals have been used where possible for like parts with the addition of the prefix '2'. The assembly essentially differs from that of Figure 3 in that the door latch is on the wet side of the door.

It should thus be appreciated, that whilst latch assemblies 24, 124 and 224 remain secured to the door modules 22, 122 and 222, restricted relative displacement therebetween is possible to enable both the door module and latch assembly to be secured to the door in their required positions regardless of tolerance errors in the door.

Furthermore, it is apparent that the rivets are solely responsible for the flexibility of the joint, meaning that no flexibility is required in either the door module or latch assembly.

The use of a resilient flexible connection has the advantage of minimising the risk of noise being generated by the joint when the vehicle is in use. Additionally, in embodiments where the door module 22, 122, 222 acts as the barrier between the wet side and dry side of a door, the joint has the advantage of being substantially water impermeable, thus inhibiting the admission of water into the dry side 158, 258.

It should be understood that similar joint arrangements may be used to secure other door components such as door handles, child safety locks and lock mechanisms to door modules, for example, where some degree of flexibility between the components is desired. It should also be understood that the numerous alternative types of resilient connection may be employed within the scope of the present invention, and that the invention should not be construed as being limited to the particular rivet disclosed. For example, the rivet may be L-shaped or angled so as to connect components at right angles or other angular relationships. Furthermore, more than two mounting and corresponding engagement portions may be provided on individual projections extending from the central body of the rivet to enable three or more components to be resiliently interconnected to the projections.

## Claims

1. A door module assembly comprising a door module (22, 122, 222) and a door component (24, 124, 224) secured together by a joint (20) so as to enable the module to be mountable, at a first position to a door casing and the door component to be mountable at a second position relative to the door casing, the joint permitting resilient relative movement between the module and component in at least two planes prior to mounting so as to enable tolerance errors between the first and second positions to be overcome.

2. A door module assembly according to Claim 1 wherein the joint permits resilient relative movement in three planes.

3. A door module assembly according to Claim 1 or Claim 2 wherein the joint comprises at least one connecting member (10, 110).

4. A door module assembly according to Claim 3 wherein the connecting member is elongate.

5. A door module assembly according to Claim 4 wherein the or each connecting member is positioned such that, the longitudinal axis thereof is substantially transverse to a plane defined by the module.

6. An assembly according to Claim 3 or Claim 4 or Claim 5 wherein the or each connecting member is a resilient rivet (10, 110).

7. An assembly according to Claim 6 wherein the rivet comprises a central body portion (12) arranged so as to separate mutually spaced mounting regions provided to mount the door component to the door module.

8. An assembly according to Claim 7 wherein the body portion and mounting regions are co-axial.

9. An assembly according to Claim 7 or Claim 8 wherein at least one of the mounting regions comprises a relatively narrow portion (14a, 14b) arranged so as to fit in an aperture (30, 32) provided in one of the latch or door module and a relatively wide portion (16a, 16b) arranged so as to retain the relatively narrow portion within the aperture.

10. An assembly according to any one of Claims 6 to 9 wherein the rivet comprises at least one engagement portion (18a, 18b) to assist in locating the latch or door module on the mounting region.

11. An assembly according to Claim 10 when dependent. upon Claim 8 wherein the engagement portion comprises a protrusion arranged co-axially with the mounting regions.

12. An assembly according to Claim 9 or Claim 10 wherein at least two or more engagement portions are provided.

13. An assembly according to any preceding Claim wherein the joint is substantially water impermeable.

14. An assembly comprising a module assembly according to any preceding Claim and a door casing.

15. A resilient connecting member (10, 110) for enabling, in use, limited relative movement between a first component (22, 122, 222) and a second component (24, 124, 224), the connecting member having a first and second mounting regions comprising first and second spaced relatively narrow portions (14a, 14b) for mounting the first and second components in a mutually spaced relationship and engagement portions (18a, 18b) positioned at the ends of the member to assist in the mounting of the components in the relatively narrow portions.

16. A member according to Claim 15 wherein an axes defined by the first and second narrow portions are not co-axial.

17. A member according to Claims 15 or Claim 16 comprising three or more mounting regions.

18. A member according to any one of Claims 15 to 17 wherein the spaced recesses define a body portion (12) therebetween.

19. A member according to Claim 18 wherein at least the body portion is hollow.

20. An assembly comprising a first component and a second component resiliently interconnected by at least one member according to any one of Claims 15 to 19.
